(19) Europäisches Patentamt
European Patent Office
Office européen des brevets

(11) Veröffentlichungsnummer : **0 115 293**
**B1**

(12) # EUROPÄISCHE PATENTSCHRIFT

(45) Veröffentlichungstag der Patentschrift : **22.02.89**

(21) Anmeldenummer : **84100477.3**

(22) Anmeldetag : **18.01.84**

(51) Int. Cl.⁴ : **C 08 G 18/32**, C 08 G 18/65, C 08 G 18/10

(54) **Verfahren zur Herstellung von Formkörpern auf Basis von Polyurethanelastomeren unter Verwendung von Diolen der Anhydro-tetrit-Reihe.**

(30) Priorität : **27.01.83 DE 3302603**

(43) Veröffentlichungstag der Anmeldung : **08.08.84 Patentblatt 84/32**

(45) Bekanntmachung des Hinweises auf die Patenterteilung : **22.02.89 Patentblatt 89/08**

(84) Benannte Vertragsstaaten : **BE DE IT NL**

(56) Entgegenhaltungen :
**EP-A- 0 052 295**
**EP-A- 0 061 609**

(73) Patentinhaber : **BAYER AG**
**Konzernverwaltung RP Patentabteilung**
**D-5090 Leverkusen 1 Bayerwerk (DE)**

(72) Erfinder : **Salzburg, Herbert, Dr.**
**Hahnenweg 3**
**D-5000 Köln 80 (DE)**
Erfinder : **Meyborg, Holger, Dr.**
**Bergisch-Gladbacher Strasse 1**
**D-5068 Odenthal (DE)**
Erfinder : **Goyert, Wilhelm, Dr.**
**Haberstrasse 48**
**D-5090 Leverkusen (DE)**
Erfinder : **Barnes, James Michael**
**Bechhausen 60**
**D-5632 Wermelkirchen 1 (DE)**

**EP 0 115 293 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Es wird ein Verfahren zur Herstellung von Formkörpern auf Basis von Polyurethanelastomeren, vorzugsweise von Gießelastomeren und von thermplastischen Polyurethanelastomeren, beschrieben, dadurch gekennzeichnet, daß man als bifunktionelle Kettenverlängerer 1,4-Monoanhydroerythrit und-/oder 1,4-Monoanhydro-threit, gegebenenfalls in Abmischung mit üblichen niedermolekularen Kettenverängerungsmitteln, vorzugsweise mit Polyolen vom Molekulargewicht 62-250, bei der Polyurethansynthese über Einstufen- oder NCO-Prepolymer-Verfahren einsetzt. Die 1,4-Monoanhydrotetrite

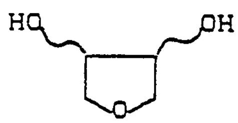

ergeben Polyurethanelastomere mit speziellen Eigenschaften.

Die Herstellung von Monoanhydro-tetriten gelingt nach literaturbekannten Verfahren in ausgezeichneter Ausbeute durch Erhitzen eines Tetrits in Gegenwart von heterogenen, sauren Ionenaustauscherharzen auf Temperaturen unterhalb 160 °C. So entsteht aus der Schmelze von Erythrit bei 140 °C im Vakuum in 94 bis 98 %iger Ausbeute das 1,4-Monoanhydro-erythrit (vgl. F.H. Otey et al., J. Org. Chem., 26, 1673 (1961). Dieses Monoanhydro-tetrit wurde zum Einsatz als Starterdiol für Epoxide zur Herstellung von Hydroxypolyetherdiolen, welche übliche Polyurethanausgangsmaterialien sind, vorgeschlagen.

In der DE-OS 3 041 673 (EP-A 52 295) wird nochmals eine Herstellung von Monoanhydrotetriten oder Mono- und/oder Bisanhydrohexiten durch Umsetzung in der Schmelze von Tetriten oder Hexiten in Gegenwart von Ionenaustauscherharzen unterhalb 160 °C und gegebenenfalls im Vakuum beschrieben und für solche Anhydrozuckeralkohole eine Verwendung als Ausgangsmaterialien für chemische Synthesen, insbesondere von Polyurethanen, wo sie u. a. als Starter dienen, beschrieben.

Auch die Veröffentlichung von H.U. Woelk in Nachr. Chem. Tech. Lab. 30, 204-206 (1982) beschreibt die Verwendung von cyclischen Diolen, z. B. Anhydroverbindungen von Sorbit, als interessante Synthesebausteine für Polyester und Polyurethane.

Die Verwendung kurzkettiger Diole als Kettenverlängerungsmittel bei der Herstellung von Polyurethankunststoffen ist generell bekannt. Zur Herstellung von Polyurethankunststoffen mit hohem physikalischem Werteniveau haben sich bestimmte Kombinationen von Isocyanat und Kettenverlängerer, wie sie etwa im Kunststoff-Handbuch, Band VII, Vieweg-Höchtlen, Carl-Hanser-Verlag, München, 1966, auf den Seiten 206 ff beschrieben sind, als besonders geeignet erwiesen. Derartigen Kombinationen sind u. a. das System 1,5-Diisocyanatonaphthalin/1,4-Butandiol oder 4,4'-Diisocyanato-diphenylmethan/Hydrochinon-bis-(2-hydroxyethyl)-ether. Auch eine Kettenverlängerung mit 2,3-Butandiol gibt in Verbindung mit 1,5-Diisocyanatonaphthalin hochwertige Kunststoffe.

Die hohe Reaktivität der üblichen Kettenverlängerer führt besonders bei Systemen mit hohem Hartsegmentanteil (hohem Diisocyanateinsatz) zu sehr kurzen Topfzeiten, so daß eine Verarbeitung zu Formteilen nicht immer ohne Schwierigkeiten möglich ist. Außerdem kann es durch die große Wärmeentwicklung bei einer zu schnellen Reaktion mit dem Kettenverlängerer zur Bildung von Inhomogenitäten im fertigen Formteil kommen, die nachteilige Auswirkung auf die Produktqualität haben.

Bisherige Nachteile dieser Art lassen sich durch den in der DE-OS 3 111 093 (& EP-A-61 609) der Anmelderin beschriebenen Einsatz von 1.4-3.6-Dianhydro-hexiten als Kettenverlängerer weitgehend beseitigen. Der vollständige Ersatz typischer Kettenverlängerer (z. B. Butandiol) in für diese optimierten Gießelastomersystemen auf Basis Naphthylen-1,5-diisocyanat durch 1.4-3.6-Dianhydrohexite führt zu Polyurethankunststoffen, die in ihrem Werteniveau in einigen Parametern wie Weiterreißfestigkeit und Strukturfestigkeit deutlich günstiger zu beurteilen sind. Nachteilig ist aber, daß die mit 1.4-3.6-Dianhydrohexiten als Kettenverlängerer hergestellten Polyurethan-Formteile einen relativ starken Schrumpf besitzen, der die Herstellung dimensionsgerechter Formkörper erschwert.

Es wurde nun gefunden, daß man unter Anwendung an sich bekannter Ein- oder Mehrstufenverfahren Polyurethanelastomere mit in weiten Bereichen einstellbaren Topfzeiten während der Herstellung und mit gutem physikalischen Werteniveau, insbesondere wesentlich günstigerem Schrumpfverhalten, herstellen kann, wenn als Kettenverlängerungsmittel 1.4-Monoanhydro-tetrite eingesetzt werden.

Es ist überraschend, daß durch den Ersatz von 1.4-3.6-Dianhydrohexiten durch 1.4-Monoanhydrotetrite in Elastomersystemen, vorzugsweise Gießelastomersystemen und thermoplastischen PU-Elastomeren, das Schrumpfverhalten damit hergestellter Polyurethanformteile entscheidend verbessert wird. Dieses Ergebnis war in Anbetracht der ähnlichen Struktur der erfindungsgemäß verwendeten Kettenverlängerer zu den vorbekannten Dianhydrohexiten nicht vorhersehbar.

Ein weiterer verarbeitungstechnischer Vorteil der erfindungsgemäßen Kettenverlängerer liegt darin, daß sie bei Raumtemperatur flüssig sind. Dadurch wird ihre Applikation wesentlich erleichtert, da ein vorheriges Aufschmelzen oder ständiges Erwärmen entfällt.

Gegenstand der Erfindung ist nun ein Verfahren zur Herstellung von Formkörpern auf Basis von

Polyurethanelastomeren, vorzugsweise Gießelastomeren und thermoplastischen Polyurethanelastomeren, durch Umsetzung von

a) organischen Polyisocyanaten mit

b) höhermolekularen Verbindungen des Molekulargewichtbereichs 400-10 000 mit mindestens zwei Gruppen, welche gegenüber Isocyanaten reaktive Wasserstoffatome aufweisen,

c) niedermolekularen Kettenverlängerungsmitteln des Molekulargewichts 62-399 mit mindestens 2 Gruppen, welche gegenüber Isocyanaten reaktive Wasserstoffatome enthalten sowie gegebenenfalls

d) Katalysatoren und weiteren an sich bekannten Zusatzstoffen

nach dem Einstufen- oder NCO-Prepolymerverfahren, und übliche Weiterverarbeitung zu Formkörpern, dadurch gekennzeichnet, daß als Komponente c) 1,4-Monoanhydro-tetrite als alleinige Kettenverlängerungsmittel oder in Abmischung mit anderen üblichen Kettenverlängerungsmitteln, vorzugsweise in Abmischung mit Diol-Kettenverlängerungsmitteln, eingesetzt werden.

Für die Durchführung des erfindungsgemäßen Verfahrens werden eingesetzt:

Als Polyisocyanate a) aliphatische, cycloaliphatische, araliphatische und aromatische Diisocyanate, wie sie z. B. von W. Siefken in Justus Liebigs Annalen der Chemie, 562, Seiten 75-136, beschrieben werden, beispielsweise solche der Formel $Q(NCO)_n$, in der n 2 bis 4, vorzugsweise 2, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen bedeuten. Beispiele sind 1,6-Hexamethylendiisocyanat, 1,12-Dodecandiisocyanat, Cyclohexan-1,3- und —1,4-diisocyanat sowie beliebige Gemische dieser Isomeren, 1-Isocyanato-3,3,5-trimethyl-5-isocyanatomethyl-cyclohexan, Lysinesterdiisocyanate, 2,4- und 2,6-Hexahydrotouylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat in allen stereoisomeren Gemischen, besonders aber aromatische Diisocyanate wie 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, 3,3'-Dimethyl-4,4'-diisocyanatobiphenyl, Naphthylen-1,5-diisocyanat. Ferner ist es möglich, beliebige Mischungen der vorgenannten Polyisocyanate zu verwenden.

Weitere geeignete Polyisocyanate (vorzugsweise Diisocyanate) werden in der DE-OS 2 920 501 (Seiten 13-16) beschrieben.

Bevorzugte Polyisocyanate sind neben Hexamethylendiisocyanat, Isophorondiisocyanat und Dicyclohexylmethan-4,4'- und/oder -2,4'-diisocyanaten insbesondere die technisch leicht zugänglichen aromatischen Polyisocyanate, z. B. das 2,4- und 2,6-Toluylendiisocyanat sowie beliebige Gemische dieser Isomeren (TDI), Polyphenylpolymethylen-Polyisocyanate, wie sie durch Anilin-Formaldehyd-Kondensation und anschließende Phosgenierung hergestellt werden (rohes MDI), 4,4'-Diphenylmethandiisocyanat, gegebenenfalls in Abmischung mit seinen 2,4'- und/oder 2,2'-Isomeren, 3,3'-Dimethyl-4,4'-diisocyanatodiphenyl (TODI) und 1,5-Naphthylendiisocyanat. Besonders bevorzugt sind 4,4'-Diphenylmethandiisocyanat, 3,3'-Dimethyl-4,4'-diisocyanatodiphenyl und 1,5-Naphthylendiisocyanat.

Als Ausgangskomponenten b) mit mindestens zwei Gruppen, welche gegenüber Isocyanat reaktionsfähige Wasserstoffatome und ein Molekulargewicht in der Regel von 400 bis 10 000 aufweisen, verwendet man Hydroxyl-, Amino-, Thiol- und/oder Carboxylgruppen aufweisende höhermolekulare Verbindungen, insbesondere 2 bis 8 Hydroxylgruppen aufweisende Verbindungen, speziell solche vom Molekulargewicht 1 000 bis 7 000. Dies sind z. B. mindestens 2, vorzugsweise 2 bis 3 Hydroxylgruppen aufweisende höhermolekulare Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z. B. Umsetzungsprodukte von mehrwertigen, vorzugsweise zweiwertigen und gegebenenfalls zusätzlich drei- und vierwertigen Alkoholen mit mehrwertigen, vorzugsweise zweiwertigen Carbonsäuren, Polycarbonsäureanhydriden oder entsprechenden Polycarbonsäureestern von niedrigen Alkoholen. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Polycarbonsäuren und deren Derivate seien genannt: Adipinsäure, Sebacinsäure, Phthalsäure, Phthalsäureanhydrid, Tetrahydro- oder Hexahydrophthalsäureanhydrid, Isophthalsäure, Trimellitsäure, Maleinsäureanhydrid, di- und trimerisierte ungesättigte Fettsäuren, Terephthalsäuredimethylester und Terephthalsäure-bis-glykolester.

Als mehrwertige Alkohole kommen z. B. Ethylenglykol, Propandiol-1,2- und/oder -1,3, Butandiol-1,4 und/oder -2,3, Hexandiol-1,6, Neopentylglykol, 1,4-Bis-hydroxymethylcyclohexan, 2-Methyl-1,3-propandiol, Glycerin, Trimethylolpropan, Hexantriol-1,2,6, Pentaerythrit, Chinit, Mannit und Sorbit, Formit, Methylglycosid, ferner Di-, Tri-, Tetra- und höhere Polyoxyethylen-, Polyoxypropylen-, sowie Polyoxybutylendiole mit Molekulargewichten bis 399 in Frage.

Die Polyester können anteilig endständige Carboxylgruppen aufweisen. Auch Polyester aus Lactonen, z. B. ε-Caprolacton oder Hydroxycarbonsäuren, z. B. ε-Hydroxycapronsäure, sind einsetzbar.

Auch die erfindungsgemäß in Frage kommenden, mindestens 2, in der Regel 2 bis 8, vorzugsweise 2 bis 3 Hydroxylgruppen aufweisenden Polyether sind solche der an sich bekannten Art und werden z. B.

durch Polymerisation von Tetrahydrofuran und/oder Epoxiden wie Ethylenoxid, Propylenoxid, Butylenoxid, Styroloxid oder Epichlorhydrin mit sich selbst, z. B. in Gegenwart von Lewis-Katalysatoren, oder durch Anlagerung dieser Epoxide, vorzugsweise Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol, Diethylenglykol, Dimethylolpropan, Glycerin, Sorbit, Sucrose, Formit oder Formose, sowie 4,4'-Dihydroxydiphenylpropan, Anilin, Ethylendiamin oder Ethanolamin, hergestellt. Auch OH-Gruppen aufweisende Polythioether, Polybutadiene, Polyacetale, Polycarbonate oder Polyesteramide sind einsetzbare Ausgangsprodukte.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den obengenannten, Hydroxylgruppen aufweisenden, Verbindungen ablaufen läßt.

Auch die durch Vinylpolymerisate modifizierten Polyhydroxylverbindungen, wie sie z. B. die Polymerisation von Styrol und/oder Acrylnitril in Gegenwart von Polyethern oder Polycarbonatpolyolen ergibt, sind für das erfindungsgemäße Verfahren geeignet.

Vertreter der genannten, erfindungsgemäß zu verwendenden höhermolekularen Polyhydroxylverbindungen sind z. B. in High Polymers, Vol. XVI, « Polyurethanes, Chemistry and Technology », verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, ferner im Kunststoff-Handbuch Band VII, Vieweg-Höchtlen, Carl-Hanser-Verlag, München 1966, z. B. auf den Seiten 45 bis 71, sowie besonders in der DE-OS 2 920 501, auf den Seiten 17-24 aufgeführt. Selbstverständlich können Mischungen der obengenannten Verbindungen, z. B. Mischungen von Polyethern und Polyestern, eingesetzt werden.

Auch bereits Urethan- oder Harnstoffgruppen enthaltende Polyhydroxylverbindungen sowie gegebenenfalls modifizierte natürliche Polyole wie Rizinusöl sind einsetzbar.

Weiterhin sind höhermolekulare Di- oder Polyaminopolyether, Di- oder Polyamino-polyester, wie sie beispielsweise nach dem Verfahren der DE-OS 2 948 419 zugänglich sind, als Komponente b) einsetzbar.

Erfindungsgemäß werden als Kettenverlängerungsmittel c) Verbindungen aus der Reihe 1.4-Monoanhydro-tetrite eingesetzt, d. h. 1.4-Monoanhydro-erythrit und/oder 1.4-Monoanhydro-threit. Bevorzugt wird der technisch gut zugängliche 1.4-Monoanhydro-erythrit verwendet.

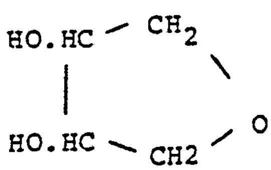

(1.4-Monoanhydro-tetrite-, auch kurz als « 1,4-Anhydro-tetrite » bezeichnet)

Die erfindungsgemäßen Kettenverlängerer können nach bekannten Verfahren hergestellt werden.

Die erfindungsgemäßen 1.4-Monoanhydro-tetrit-Kettenverlängerer können selbstverständlich auch in Form von Abmischungen der beiden 1.4-Monoanhydro-tetrite in beliebigen Mischungsverhältnissen, vorzugsweise mindestens 20 Gew.-% Monoanhydro-erythrit enthaltend, verwendet werden.

Andererseits werden erfindungsgemäß auch Mischungen aus Monoanhydrotetrit(en) mit anderen kurzkettigen Verbindungen des Molekulargewichts 62 bis 399, vorzugsweise 62 bis 250, welche 2 bis 8, vorzugsweise 2 bis 4, besonders bevorzugt 2 Gruppen, die gegenüber Isocyanaten reaktionsfähige Wasserstoffatome enthalten (d. h. sogenannten Kettenverlängerungsmittel), verwendet.

Als Beispiele für derartige, Hydroxylgruppen und/oder Aminogruppen und/oder Thiolgruppen und/oder Carboxylgruppen, vorzugsweise Hydroxylgruppen und/oder Aminogruppen enthaltende Kettenverlängerer seien genannt : Niedermolekulare Polyole und/oder Aminoalkohole vom Molekulargewicht 62 bis 399, vorzugsweise von 62 bis 250, z. B. Ethylenglykol, Propandiol-(1,2) und -(1,3), Butandiol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol, Dianhydrohexite, Trimethylolpropan, Hexantriol-(1,2,6), Trimethylolethan, Pentaerythrit, Chinit, Mannit und Sorbit, Ricinusöl, Di-, Tri-, Tetra- und höhere Polyoxyethylen-Polyoxypropylen- und Polyoxybutylenglykole mit einem Molekulargewicht bis 399, Di-, Tri- und höhere Polyoxypropylenglykole mit einem Molekulargewicht bis 399, Di-, Tri- und höhere Polybutylenglykole mit einem Molekulargewicht bis 399, 4,4'-Dihydroxy-diphenylpropan, Di-hydroxyethylhydrochinon, Ethanolamin, Diethanolamin, N-Methyldiethanolamin, Triethanolamin und 3-Aminopropanol.

Erfindungsgemäß geeignete Diamine sind beispielsweise 1-Amino-3,3,5-trimethyl-5-aminomethylcyclohexan, Perhydro-2,4'- und -4,4'-diaminodiphenylmethan, auch Hydrazin und substituierte Hydrazine, sowie Säuredihydrazide.

Zur Steuerung ihrer Reaktivität können die Aminogruppen ganz oder teilweise durch $CO_2$ in Form ihrer Carbonate oder durch Aldimin- bzw. Ketimin-Gruppen blockiert sein.

Als Beispiele für die bevorzugten aromatischen Diamine seien Bisanthranilsäureester, 3,5- und 2,4-Diaminobenzoesäureester, estergruppenhaltige Diamine, Ethergruppen aufweisende Diamine, gegebenenfalls in 5-Stellung substituierte 2-Halogen-1,3-phenylendiamine, 3,3'-Dichlor-4,4'-diamino-diphenylmethan, Toluylendiamine, 3,3'-Diethyl-5,5'-diisopropyl-diphenylmethan, 4,4'-Diaminodiphenylmethan, 4,4'-Diaminodiphenylsulfid, Diaminodiphenylsulfid, Diaminodiphenyldithioether, Diaminobenzolphosphonsäureester, Sulfonat- oder Carboxylatgruppen enthaltende aromatische Diamine sowie die in der DE-Offenlegungsschrift 2 635 400 aufgeführten hochschmelzenden Diamine genannt. Beispiele für aliphatisch-aromatische Diamine sind Aminoalkylthioaniline. Weiterhin geeignet sind durch Verseifung von aromatischen Polyisocyanaten und/oder kurzkettigen NCO-Prepolymeren erhältliche Polyamine.

Für manche Zwecke ist es vorteilhaft, Polyole einzusetzen, welche Sulfonat- und/oder Phosphonatgruppen enthalten, vorzugsweise das Addukt von Bisulfit an Butandiol-1,4 bzw. dessen Alkoxylierungsprodukte. Weitere Beispiele für Kettenverlängerungsmittel sind in der DE-OS 2 920 501, Seite 25-29 genannt.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z. B. Monoamine wie Butyl- und Dibutylamin, Stearylamin, N-Methylstearylamin, Piperidin und Cyclohexylamin, Monoalkohole wie Butanol, 2-Ethylhexanol, Dodecanol, Ethylenglykolmonoethylether oder Diisopropylcarbinol.

Bevorzugt sind Abmischungen der Monoanhydrotetrite mit niedermolekularen aromatischen Diaminen und/oder Diolen, besonders bevorzugt Abmischungen mit Diolen, wobei der Anteil der Monoanhydro-tetrite vorzugsweise oberhalb 50 Mol-% der Kettenverlängerer liegt.

Obwohl die Verwendung der Monoanhydro-tetrite und ihrer Abmischungen den Vorteil einer längeren Topfzeit bietet, kann es vorteilhaft sein, gegebenenfals weitere Hilfs- und Zusatzmittel einzusetzen. Dazu gehören :

Katalysatoren für die Reaktion zwischen Hydroxyl- und Isocyanatgruppen, vorzugsweise solche der in der Polyurethanchemie an sich bekannten Art, z. B. tertiäre Amine, wie Triethylamin, N-Tetramethylethylendiamin, 1,4-Diazabicyclo-(2,2,2)-octan, N,N-Dimethylbenzylamin, N-Methyl-N'-dimethylaminoethylpiperazin, Pentamethyldiethylentriamin, oder auch als Katalysatoren bekannte Mannichbasen aus sekundären Aminen, wie Dimethylamin und Aldehyden (Formaldehyd) oder Ketonen (Aceton) und Phenolen, ferner Silaamine mit Kohlenstoff-Silicium-Bindungen, z. B. 2,2,4-Trimethyl-2-silamorpholin und 1,3-Diethylaminomethyl-tetramethyl-disiloxan. Erfindungsgemäß können auch organische Metallverbindungen, insbesondere organische Zinnverbindungen, als Katalysatoren verwendet werden, z. B. Zinn-(II)-acetat, Zinn-(II)-ethylhexoat und die Zinn-(IV)-Verbindungen, z. B. Dibutylzinndichlorid, Dibutylzinndilaurat, Dibutylzinnmaleat. Weitere geeignete Katalysatoren sind in der DE-OS 2 920 501 auf den Seiten 29, Zeile 5 bis Seite 31, Zeile 25 beschrieben.

Die Katalysatoren werden vorzugsweise in einer Menge zwischen 0,001 und 10 Gew.-%, bezogen auf das Gesamtgewicht von a), b), c), d), eingesetzt. Selbstverständlich können alle Katalysatoren als Gemische eingesetzt werden. Besonders geeignete Katalysatoren sind Zinn-II-Carbonsäuresalze, Triethylendiamin und Titansäureester. Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Als organische Treibmittel kommen z. B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage. Eine Treibwirkung kann auch durch Zusatz von bei Temperaturen über Raumtemperatur unter Abspaltung von Gasen, beispielsweise von sich in Stickstoff zersetzenden Verbindungen, erzielt werden.

Weitere Beispiele für Treibmittel sowie Einzelheiten über die Verwendung von Treibmitteln und die anzuwendenden Verfahren sind im Kunststoff-Handbuch, Band VII, herausgegeben von Vieweg und Höchtlen, Carl-Hanser-Verlag, München 1966, z. B. auf den Seiten 108 und 109, 453 bis 455 und 507 bis 510 und in der DE-OS 2 920 501 beschrieben. Unter Zuhilfenahme von Treibmitteln, eventuell auch unter Zusatz geringer Mengen von Wasser, lassen sich so auch zellförmige Polyurethanelastomere (Dichtebereich etwa zwischen 0,3 und 1,25 g/cm$^3$ — vorzugsweise 0,6 bis 1,2 —) herstellen.

Erfindungsgemäß können auch oberflächenaktive Zusatzstoffe, wie Emulgatoren und Schaumstabilisatoren, mitverwendet werden. Als Emulgatoren kommen z. B. die Natriumsalze von Ricinusölsulfonaten oder Salze von Fettsäuren mit Aminen wie Ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden. Besonders wirksame Additive stellen Polyethersiloxane, speziell wasserlösliche Vertreter, dar, welche die Gießzeit der Monoanhydro-tetrite zu regulieren vermögen, vorzugsweise verzögernd wirken.

Diese Verbindungen sind im allgemeinen so aufgebaut, daß ein Copolymerisat aus Ethylenoxid und

Propylenoxid mit einem Polydimethylsiloxanrest verbunden ist. Derartige Schaumstabilisatoren sind z. B. in den amerikanischen Patentschriften 2 834 748, 2 917 480 und 3 629 308 sowie in der deutschen Patentanmeldung P 32 33 086 der Anmelderin beschrieben.

Beispiele von gegebenenfalls erfindungsgemäß mitzuverwendenden oberflächenaktiven Zusatzstoffen, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113, sowie in der DE-OS 2 920 501, Seite 32, beschrieben.

Das erfindungsgemäße Verfahren wird im allgemeinen wie folgt durchgeführt:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der amerikanischen Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121 bis 247 beschrieben.

Die Mengen an Reaktionskomponenten werden im erfindungsgemäßen Verfahren in der Regel so gewählt, daß das NCO/XH-Verhältnis von Polyisocyanaten a) zu Kettenverlängerer c) plus höhermolekularen Verbindungen b) abhängig von jeweils angewendeten Verarbeitungsverfahren — in der Regel zwischen 0,9 und 1,5 liegt, vorzugsweise zwischen 0,90 und 1,25, besonders bevorzugt zwischen 0,95 und 1,20. Dabei bedeutet -XH eine Gruppe mit reaktiven Wasserstoffatomen, z. B. eine Hydroxyl-, Mercapto-, Amino- oder Carboxygruppe. Der Prozentgehalt an NCO im Prepolymer, falls über die Prepolymerstufe gearbeitet wird, kann 1 bis 20, vorzugsweise 2 bis 13 Gew.-% betragen.

Eine weitere Ausführungsform besteht darin, daß man die höhermolekulare Verbindung b) im Gemisch mit dem Kettenverlängerungsmittel mit einem Überschuß an Diisocyanat umsetzt und das Reaktionsprodukt nach der Granulierung in der Hitze unter Druck verformt. Je nach den angewendeten Mengenverhältnissen der Reaktionsteilnehmer können hierbei Polyurethankunststoffe mit verschiedenartigen Härten und Verschiedenartiger Elastizität erhalten werden. Man kann auf diese Weise auch bevorzugt Kunststoffe herstellen, die sich wie Thermoplaste verarbeiten lassen. Eine weitere Ausführungsform besteht darin, daß man die höhermolekulare Verbindung mit mindestens 2 Hydroxylgruppen im Gemisch mit dem erfindungsgemäß zu verwendenden Kettenverlängerungsmittel mit einem Überschuß an Diisocyanat umsetzt, wobei ein walzbares Fell erhalten wird, das anschließend, z. B. durch Vernetzung mit weiterem Diisocyanat, in einen kautschukelastischen Polyurethankunststoff übergeführt werden kann.

Erfindungsgemäß zu verwendende Elastomere finden vielseitige Anwendung, z. B. für mechanisch stark beanspruchte Formkörper, wie Rollen, Keilriemen oder Dichtungen, die thermisch oder chemisch stark beansprucht werden, für Heißwasserrohre und Motoren. Neben homogenen Elastomeren können auch zellförmige Polyurethane (weich bis hart) hergestellt werden.

Die folgenden Beispiele erläutern das erfindungsgemäße Verfahren. Wo nicht anders vermerkt, sind Zahlenwerte als Gewichtsteile bzw. Gewichtsprozente zu verstehen.

Beispiel 1

100 Gew.-Teile eines Butandiol-1,4-Adipinsäurepolyesters (OH-Zahl: 49,1) werden mit 1 Gew.-Teil 2.6-2'.6'-Tetraisopropyldiphenylcarbodiimid, 0,8 Gew.-Teilen Bis-stearoylamid des Ethylendiamins, 40 ppm Zinn-(II)-octoat und 10 Gew.-Teilen 1.4-Monoanhydro-erythrit t bei 120 °C verrührt. 36,1 Gew.-Teile 4,4'-Diisocyanatodiphenylmethan (Verhältnis von NCO zu Gesamt-OH-Gruppen = 1.03) werden auf 60 °C erhitzt und unter starkem Rühren zu der obigen, 130 °C warmen Lösung zugegeben. Das reagierende Gemisch wird anschließend auf ein mit Trennwachs versehenes Blech gegossen. Es verfestigt sich sehr rasch und kann bereits nach etwa 6 Minuten entformt werden. Das Polymer wird nun in Schneidemühlen zerkleinert und wird nach 2 bis 4 Tagen zu Formkörpern verspritzt, die 17 Stunden bei 80 °C getempert werden. Diese Formkörper weisen die in Tabelle 1 aufgeführten physikalischen Daten auf.

Es fällt insbesondere auf, daß 2 mm dicke Platten nach dem Tempern annähernd keine Schwindung zeigen.

Dieses erfindungsgemäße Produkt zeigt im Vergleich zu einem Butandiol-1,4-verlängertem thermoplastischen Polyurethan (s. Vergleichsbeispiel 3) eine Rückprallelastizität von 36 %, was bei vielen Anwendungen, z. B. Textilbeschichtung, erwünscht ist (lederartiger, angenehmer Griff). Der Druckverformungsrest bei Raumtemperatur ist niedrig.

Vergleichsbeispiel 2

Wird 1.4-3.6-Dianhydrosorbit als Kettenverlängerer eingesetzt, so dauert die Verfestigung deutlich länger, was unwirtschaftlich ist. Ferner ist die Schwindung des Formkörpers beim Tempern sehr hoch. Daher wird in der Rezeptur der Butandiol-1.4-Adipinsäurepolyester durch einen Butandiol-1.4 Ethandioladipinsäurepolyester ausgetauscht.

Es werden nunmehr also 100 Gew.-Teile eines Butandiol-1.4/Ethandiol-Adipinsäurepolyesters (OH-Zahl 56,6) mit 0,8 Gew.-Teilen Bis-stearoylamid des Ethylendiamins, 1,0 Gew.-Teil 2,6-2',6'-Tetraisopropylcarbodiimid, 40 ppm Zinn-(II)-octoat und 12 Gew.-Teilen Dianhydrosorbit bei 130 °C verrührt. 33,9 Gew.-Teile 4,4'-Diisocyanatodiphenylmethan (Verhältnis von NCO/OH-Gruppen = 1,03) werden auf 60 °C erhitzt und unter starkem Rühren zu der 130 °C warmen Lösung zugegeben. Es wird anschließend wie in Beispiel 1 beschrieben verfahren. Auffallend ist auch hier die längere Verfestigungsdauer von etwa 15 Minuten, bevor das Produkt vom Blech entformt werden kann. Daneben zeigt auch dieses Produkt eine relativ hohe Schwindung von 7 % (s. Tabelle 1), was für einige Anwendungen unerwünscht ist. Weitere Daten in Tabelle 1.

Vergleichsbeispiel 3

100 Gew.-Teile eines Butandiol-1.4-Adipinsäurepolyesters (OH-Zahl : 49,1) werden mit 0,8 Gew.-Teilen Bis-stearoylamid des Ethylendiamins, 1,0 Gew.-Teil 2,6-2',6'-Tetraisopropyl-carbodiimid, 0,002 Gew.-Teile Sn-II-octoat und 8 Gew.-Teilen Butandiol-1.4 bei 130 °C verrührt.

34,2 Gew.-Teile 4,4'-Diisocyanatodiphenylmethan (Verhältnis von NCO/OH-Gruppen = 1,03) werden auf 60 °C erhitzt und unter starkem Rühren zu der 120 °C warmen Lösung zugegeben. Es wird anschließend wie in Beispiel 1 beschrieben verfahren. Die Verfestigungsdauer beträgt 10 Minuten, bevor das Produkt entformt werden kann. Weitere Daten s. Tabelle 1.

Die Rückprallelastizität ist bei diesem Produkt recht hoch, was für bestimmte Anwendungen (wie z. B. Textilbeschichtungen, Verbundglasfolie) unerwünscht ist.

Beispiel 4 (erfindungsgemäß) : Gemisch mit anderen Kettenverlängeren

100 Gew.-Teile eines Butandiol-1,4-adipinsäure-polyesters (OH-Zahl 49) werden mit 1 Gew.-Teil 2,6-2',6'-Tetraisopropyldiphenylcarbodiimid, 0,8 Gew.-Teile Bis-stearylamid des Ethylendiamins, 40 ppm Zinn-II-octoat, 10 Gew.-Teile 1,4-Monoanhydroerythrit und 1 Gew.-Teil Butandiol-1,4 bei 120 °C verrührt. 38,9 Gew.-Teile 4,4'-Diisocyanato-diphenylmethan (Verhältnis von NCO/OH = 1,03) werden auf 80 °C erhitzt und unter starkem Rühren zu der 130 °C warmen lösung zugegeben. Es. wird anschließend, wie in Beispiel 1 beschrieben, verfahren. Das reagierende Gemisch kann vom Blech nach 9 Minuten entfernt werden. Es werden die in Tabelle 1 aufgeführten Daten am verspritzten und getemperten Produkt ermittelt. Das Produkt zeigt gute Festigkeiten und eine relativ niedrige Schwindung.

Beispiel 5 Gießprozeß-erfindungsgemäß

250 Teile eines aus Adipinsäure, Butandiol-1,4 und Ethylenglykol (Molverhältnis der Diole 1 : 1) bestehenden Polyesters mit einer mittleren Molmasse von 2000, (OH-Zahl 56) werden bei 130 °C und einem Vakuum von ca. 40 mbar entwässert und anschließend bei 140 °C gehalten.

Dann gibt man 100 Teile 1,5-Diisocyanatonaphthalin zu. Nach Beendigung der exothermen Reaktion werden zu dem NCO-Prepolymer unter starkem Rühren (bei ca. 130 °C) 32,5 Teile Monoanhydro-erythrit gegeben. Es wird 60 Sekunden gerührt und dann in eine auf 110 °C vorgeheizte Form gegossen. Die Mischung ist ca. 25 Minuten gießfähig und erstarrt nach ca. 60 Minuten. Es wird noch 24 Stunden bei 110 °C getempert.

Das fertige Elastomer hat die in Tabelle 1. angegebenen Eigenschaften. Sein Weiterreißwiderstand (nach Graves) beträgt 81 KN/m.

Auch hier wird eine im Vergleich zu Butandiol-1,4 verlängerten Elastomeren (ca. 50 %) niedrige Rückprallelastizität von 35 % ermittelt.

(Siehe Tabelle 1 Seite 8 f.)

Tabelle 1

Physikalische Eigenschaften der thermoplastischen PU-Elastomeren der Beispiele 1 bis 5

| Eigenschaften | Maßeinheit | Prüfnorm | Beispiel Nr. 1 | 2 (Vergleich) | 3 (Vergleich) | 4 | 5 |
|---|---|---|---|---|---|---|---|
| Schwindung von 125x65x2 mm großen Platten in Längsrichtung nach 17 h, 80°C | % | | 0,4 | 7 | 4 | 0,8 | 0,9 |
| Zugspannung | MPa | DIN 53504 | 35 | 28 | 32 | 46 | 40 |
| Bruchdehnung | % | DIN 53504 | 618 | 510 | 702 | 638 | |
| Shore Härte A | - | DIN 53505 | 78 | 73 | 78 | 80 | 95 |
| Shore Härte D | - | - | - | - | - | - | 43 |
| Rückprallelastizität | % | DIN 53512 | 36 | 42 | 46 | 33 | 35 |
| Druckverformungsrest 70 h, 20°C | % | DIN 53517 | 17 | 19 | 28 | - | - |

**Patentansprüche**

1. Verfahren zur Herstellung von Formkörpern auf Basis von Polyurethanelastomeren durch Umsetzung von

a) organischen Polyisocyanaten mit

b) höhermolekularen Verbindungen des Molekulargewichts 400-10 000 mit mindestens 2 Gruppen, welche gegenüber Isocyanaten reaktive Wasserstoffatome enthalten sowie gegebenenfalls

c) niedermolekularen Kettenverlängerungsmitteln des Molekulargewichts 62-399 mit mindestens 2 Gruppen, welche gegenüber Isocyanaten reaktive Wasserstoffatome enthalten sowie gegebenenfalls

d) Katalysatoren und weiteren an sich bekannten Zusatzstoffen, nach dem Einstufen- oder NCO-Prepolymerverfahren,

und übliche Weiterverarbeitung zu Formkörpern, dadurch gekennzeichnet, daß als Komponente c) 1,4-Monoanhydro-tetrite als alleinige Kettenverlängerungsmittel oder in Abmischung mit anderen üblichen Kettenverlängerungsmitteln eingesetzt werden.

2. Verfahren nach Anspruch 1, dadurch gekennzeichnet, daß als Komponente c) 1,4-Monoanhydro-erythrit, gegebenenfalls in Mischung mit 1,4-Monoanhydrothreit, eingesetzt wird.

3. Verfahren nach Ansprüchen 1 und 2, dadurch gekennzeichnet, daß als Komponente c) Mischungen aus 1,4-Monoanhydro-erythrit und 1,4-Mononhydrothreit mit mindestens 20 Gew.-% 1,4-Monoanhydro-erythrit eingesetzt werden.

4. Verfahren nach Ansprüchen 1 bis 3, dadurch gekennzeichnet, daß man als Komponente c) Mischungen aus 1,4-Monoanhydro-tetrit(en) und anderen Kettenverlängerungsmitteln c) des Molekulargewichts 62 bis 399 verwendet.

5. Verfahren nach Anspruch 4, dadurch gekennzeichnet, daß man als andere Kettenverlängerungsmittel c) Diole oder aromatische Diamine verwendet.

6. Verfahren nach Ansprüchen 4 und 5, dadurch gekennzeichnet, daß man in der Mischung aus 1,4-Monoanhydro-tetriten und anderen Kettenverlängerungsmitteln mindestens 50 Mol-% Monoanhydrotetrite einsetzt.

**Claims**

1. Process for the production of mouldings based on polyurethane elastomers by the reaction of

a) organic polyisocyanates with

b) relatively high molecular weight compounds with a molecular weight of 400-10,000 having at least 2 groups containing hydrogen atoms which are reactive towards isocyanates, and optionally

c) low molecular weight chain-lengthening agents with a molecular weight of 62-399 having at least 2 groups containing hydrogen atoms which are reactive towards isocyanates, and optionally

d) catalysts and other additives known per se, by the one-shot or NCO prepolymer process,

and conventional further processing into mouldings, characterised in that 1,4-monoanhydro-tetritols are used as component c), either as the only chain-lengthening agents or in admixture with other, conventional chain-lengthening agents.

2. Process according to Claim 1, characterised in that 1,4-monoanhydro-erythritol is used as component c), optionally in admixture with 1,4-monoanhydro-threitol.

3. Process according to Claims 1 and 2, characterised in that mixtures of 1,4-monoanhydro-erythritol and 1,4-monoanhydro-threitol containing at least 20 % by weight of 1,4-monoanhydro-erythritol are used as component c).

4. Process according to Claims 1 to 3, characterised in that mixtures of 1,4-monoanhydrotetritol(s) and other chain-lengthening agents c) with a molecular weight of 62 to 399 are used as component c).

5. Process according to Claim 4, characterised in that diols or aromatic diamines are used as the other chain-lengthening agents c).

6. Process according to Claims 4 and 5, characterised in that at least 50 mol % of monoanhydrotetritols are used in the mixture of 1,4-monoanhydro-tetritols and other chain-lengthening agents.

**Revendications**

1. Procédé de fabrication de corps moulés à base d'élastomères de polyuréthanes en faisant réagir :

a) des polyisocyanates organiques avec

b) des composés d'un poids moléculaire très élevé de 400 à 10 000 comportant au moins 2 groupes contenant des atomes d'hydrogène réactifs vis-à-vis des isocyanates, ainsi qu'éventuellement

c) des agents d'allongement de chaîne d'un faible poids moléculaire de 62-399 comportant au moins deux groupes contenant des atomes d'hydrogène réactifs vis-à-vis des isocyanates, ainsi qu'éventuellement

d) des catalyseurs et d'autres additifs connus en soi, selon le procédé direct ou à prépolymères de NCO,

ainsi que par traitement complémentaire habituel en vue d'obtenir des corps moulés, caractérisé en ce que, comme composant c), on utilise des 1,4-mono-anhydro-tétrols comme uniques agents d'allongement de chaîne ou en mélange avec d'autres agents habituels d'allongement de chaîne.

2. Procédé selon la revendication 1, caractérisé en ce que comme composant c), on utilise le 1,4-mono-anhydro-érythritol, éventuellement en mélange avec le 1,4-mono-anhydro-thréitol.

3. Procédé selon les revendications 1 et 2, caractérisé en ce que comme composant c), on utilise des mélanges de 1,4-mono-anhydro-érythritol et de 1,4-mono-anhydro-thréitol avec au moins 20 % en poids de 1,4-mono-anhydro-érythritol.

4. Procédé selon les revendications 1 à 3, caractérisé en ce que comme composant c), on utilise des mélanges de 1,4-mono-anhydro-tétrol(s) et d'autres agents d'allongement de chaîne c) d'un poids moléculaire de 62 à 399.

5. Procédé selon la revendication 4, caractérisé en ce que, comme autres agents d'allongement de chaîne c), on utilise des diols ou des diamines aromatiques.

6. Procédé selon les revendications 4 ou 5, caractérisé en ce que, dans le mélange de 1,4-mono-anhydro-tétrols et d'autres agents d'allongement de chaîne, on utilise au moins 50 % molaires de mono-anhydro-tétrols.